# EUROPÄISCHE PATENTSCHRIFT

(11) **EP 1 682 446 B1**
(45) Veröffentlichungstag und Bekanntmachung des Hinweises auf die Patenterteilung: **22.08.2012**
(21) Anmeldenummer: 04803141.3
(22) Anmeldetag: 14.11.2004
(51) Int. Cl.: C01B 25/45, H01M 4/58, H01M 4/02

(54) **LITHIUMMETALLPHOSPHATE, VERFAHREN ZU DEREN HERSTELLUNG UND DEREN VERWENDUNG ALS ELEKTRODENMATERIALIEN**
LITHIUM METAL PHOSPHATES, METHOD FOR PRODUCING THE SAME AND USE THEREOF AS ELECTRODE MATERIAL
LITHIUM-METAL-PHOSPHATE, PROCEDES DE REALISATION ASSOCIES ET UTILISATION COMME MATIERE D'ELECTRODE

(30) Priorität: 14.11.2003 DE 10353266
(43) Veröffentlichungstag der Anmeldung: 26.07.2006
(60) Teilanmeldung: 10186314.0
(73) Patentinhaber: Süd-Chemie IP GmbH & Co. KG, 80333 München (DE)
(72) Erfinder: NUSPL, Gerhard, 85659 Forstern (DE); WIMMER, Lucia, 84034 Landshut (DE); EISGRUBER, Max, 84079 Bruckberg (DE)
(74) Vertreter: Stolmár, Matthias
(86) Internationale Anmeldenummer: PCT/EP2004/012911
(87) Internationale Veröffentlichungsnummer: WO 2005/051840

(56) Entgegenhaltungen:
- WO-A-02/083555
- WO-A-02/099913
- ARNOLD G ET AL: "Fine-particle lithium iron phosphate LiFePO4 synthesized by a new low-cost aqueous precipitation technique" JOURNAL OF POWER SOURCES, ELSEVIER SEQUOIA S.A. LAUSANNE, CH, Bd. 119-121, 1. Juni 2003 (2003-06-01), Seiten 247-251, XP004430175 ISSN: 0378-7753
- YANG S ET AL: "Hydrothermal synthesis of lithium iron phosphate cathodes" ELECTROCHEMISTRY COMMUNICATION, ELSEVIER, AMSTERDAM, NL, Bd. 3, 2001, Seiten 505-508, XP002266496 ISSN: 1388-2481
- TAJIMI S ET AL: "Enhanced electrochemical performance of LiFePO4 prepared by hydrothermal reaction" SOLID STATE IONICS, NORTH HOLLAND PUB. COMPANY. AMSTERDAM, NL, Bd. 175, Nr. 1-4, 30. November 2004 (2004-11-30), Seiten 287-290, XP004667584 ISSN: 0167-2738

## Beschreibung

Die vorliegende Erfindung betrifft ein Verfahren zur Herstellung von Lithiumeisenphosphat, das danach erhältliche Material mit sehr kleiner Teilchengröße und enger Teilchengrößenverteilung sowie dessen Verwendung insbesondere in einer Sekundärbatterie.

Aus dem Stand der Technik ist die Verwendung von synthetischem Lithiumeisenphosphat (LiFePO₄) als alternatives Kathodenmaterial in Lithiumionen-Batterien bekannt. Dies wurde erstmals in A.K. Padhi, K.S. Nanjundaswamy, J.B. Goodenough, J. Electrochem. Soc. Vol. 144 (1977) beschrieben, und ist beispielsweise auch in der US 5,910,382 offenbart.

Die Verwendung von Phosphaten wie Lithiumeisenphosphat als positive Elektrode für sekundäre Lithiumbatterien ist weiterhin in der WO 02/099913 A1 beschrieben, wobei zur Herstellung aus einer äquimolaren wässrigen Lösung von Li⁺, Fe³⁺ und PO₄³⁻ das Wasser verdampft und dadurch eine Feststoffmischung hergestellt wird, worauf die Feststoffmischung bei einer Temperatur unterhalb von 500°C zersetzt wird, um einen reinen Li- und Fe-Phosphatprecursor zu erzeugen, und anschließend durch Umsetzung des Precursors bei einer Temperatur von unter 800°C in reduzierender Atmosphäre ein LiFePO₄-Pulver erhalten wird.

Weitere sogenannte Sinterverfahren sind aus dem Stand der Technik bekannt. Nachteile sind einerseits die hohen Materialkosten der Ausgangschemikalien (z.B. Eisenoxalat). Auch ist der Schutzgasverbrauch während des Sinterprozesses erheblich und toxische Nebenprodukte wie CO entstehen bei der Sinterung. Es wurde auch gefunden, dass häufig die Partikelgrößenverteilung des Produkts sehr breit und bimodal ist. Weitere Herstellungsverfahren sind beispielsweise aus der WO 02/083555, der EP 1 094 523 A1, der US 2003/0124423 sowie Franger et al., Journal of Power Sources 119-121 (2003), S. 252 - 257 bekannt.

Auch die JP 2002-151082 A beschreibt Lithiumeisenphosphat, Verfahren zu seiner Herstellung sowie eine Sekundärbatterie, die es verwendet. Das Verfahren zur Herstellung von Lithiumeisenphosphat, ist dadurch gekennzeichnet, dass eine Lithiumverbindüng, eine zweiwertige Eisenverbindung und eine Phosphorsäureverbindung so vermischt werden, dass zumindest das Molverhältnis der zweiwertigen Eisenionen und der Phosphorsäureionen etwa 1:1 beträgt, und das Gemisch in einem Temperaturbereich von mindestens 100°C bis höchstens 200°C in einem dicht verschlossenen Gefäß unter Beifügen eines polaren Lösungsmittels und eines inaktiven Gases zur Reaktion gebracht wird. Das so erhaltene Lithiumeisenphosphat kann anschließend physikalisch zerkleinert werden.

Obwohl mit den Verfahren nach dem Stand der Technik bereits brauchbares Lithiumeisenphosphat erhalten werden kann, weisen die herkömmlichen Herstellungsverfahren dennoch den Nachteil auf, dass es nicht möglich ist, pulverförmiges Lithiumeisenphosphat mit einer sehr geringen Teilchengröße sowie einer sehr engen Teilchengrößenverteilung zu erhalten.

Es besteht daher ein großer Bedarf nach geeigneten Verfahren zur Herstellung eines Lithiumeisenphosphats mit sehr geringer Teilchengröße sowie sehr enger Teilchengrößenverteilung, das gut in das Elektrodenmaterial einer Sekundärbatterie einarbeitbar ist und dort sehr gute elektrochemische Eigenschaften zeigt.

Aufgabe der vorliegenden Erfindung war es somit, ein Verfahren zur Herstellung von Lithiumeisenphosphat bereitzustellen, das die Nachteile des Standes der Technik vermeidet und insbesondere für Elektroden wiederaufladbarer Batterien besonders geeignetes Material liefert.

Die vorstehende Aufgabe wird erfindungsgemäß mit dem Verfahren nach Anspruch 1 gelöst. Vorteilhafte bzw. bevorzugte Weiterbildungen sind in den Unteransprüchen angegeben.

Das erfindungsgemäße Verfahren kann außer zur Herstellung von LiFePO₄ auch zur Herstellung von anderen Verbindungen der allgemeinen Summenformel LiMPO₄, worin M mindestens ein Metall der ersten Übergangsreihe darstellt, eingesetzt werden. Allgemein ist M ausgewählt aus mindestens einem Metall der Gruppe bestehend aus Fe, Sc, Ti, V, Cr, Mn, Co, Ni, Cu, Zn, Be, Mg, Ca, Sr, Ba, Al, Zr und La. Besonders bevorzugt ist M ausgewählt aus Fe, Mn, Co und/oder Ni. Vorzugsweise umfasst M jedoch zumindest Fe.

Auch kann M für zwei oder mehr Übergangsmetalle in der Verbindung LiMP04 stehen; beispielsweise kann das Eisen in LiFePO₄ teilweise durch ein oder mehrere andere Metalle, ausgewählt aus der vorstehenden Gruppe, z. B. durch Zn ersetzt sein. Besonders bevorzugt ist LiFePO₄. LiMPO₄ wird nach dem erfindungsgemäßen Verfahren bevorzugt in phasenreiner Form gewonnen.

So wurde erfindungsgemäß überraschend gefunden, dass in einem Verfahren zur Herstellung von LiMPO₄ durch eine intensive Dispergier- oder Mahlbehandlung einer Precursormischung oder -suspension, enthaltend mindestens eine Li⁺-Quelle, mindestens eine M²⁺-Quelle und mindestens eine PO₄³⁻Quelle, eine sehr enge Teilchengrößenverteilung sowie eine sehr geringe Teilchengröße des Endprodukts, LiMPO₄, erzielt werden können.

Der erfindungsgemäße Einsatz der Dispergier- oder Mahlbehandlung der Precursormischung bewirkt eine intensive Mischung und gleichzeitig eine Deagglomeration bzw. Verkleinerung der Teilchenaggregate in der Suspension. Dies wird durch eine herkömmliches Rühren mit niedriger Geschwindigkeit nicht bewirkt.

Zur Durchführung der erfindungsgemäßen Dispergier- oder Mahlbehandlung kann jede dem Fachmann als geeignet erscheinende Vorrichtung verwendet werden, mit der ausreichende Scherkräfte oder Turbulenz erzeugt werden können, die zu einer intensiven Mischung und gleichzeitig einer Deagglomeration bzw. Verkleinerung der Teilchenaggregate in der Suspension führen können, so dass ein D90-Wert von weniger als 50 µm erzielt wird. Bevorzugte Vorrichtungen umfassen Dispergatoren (mit oder ohne Pumprotoren), Ultraturrax, Mühlen wie Kolloidmühlen oder Manton-Gaulin-Mühlen, Intensivmischer, Kreiselpumpen, In-Line-Mischer, Mischdüsen wie Injektordüsen oder Ultraschallgeräte. Solche Vorrichtungen als solche sind dem Fachmann bekannt. Die erforderlichen Einstellungen, um den gewünschten Effekt auf die mittlere Teilchengröße in der Precursor-Suspension (vgl. oben) zu erhalten, können je nach Vorrichtungstyp anhand von routinemäßigen Versuchen bestimmt werden.

In vielen Fällen wird ein Leistungseintrag in die Precursorsuspension im Rahmen der erfindungsgemäßen Dispergier- oder Mahlbehandlung bei mindestens 5 kW/m³ der zu behandelnden Mischung bzw. Suspension, insbesondere mindestens 7 kW/m³ liegen. Dieser Leistungseintrag kann auf bekannte Weise je nach Vorrichtung bestimmt werden, z.B. bei Verwendung eines Ultra-Turrax-Rührers anhand der Formel P = 2·π·n·M, wobei M das Drehmoment und n die Drehzahl darstellt.

Nach einer weiteren bevorzugten erfindungsgemäßen Ausführungsform wird der Energieeintrag in die Precursorsuspension im Rahmen der erfindungsgemäßen Dispergier- oder Mahlbehandlung bei mindestens 5 kWh/m³ der zu behandelnden Mischung bzw. Suspension, insbesondere mindestens 7 kWh/m³ liegen. Dabei werden vorzugsweise, jedoch nicht zwingend, auch die vorstehenden Werte für den Leistungseintrag eingehalten.

Überraschenderweise wurde auch gefunden, dass eine Zerkleinerung des fertigen LiMPO₄ anstelle der Dispergier- oder Mahlbehandlung bei der Herstellung gemäß der Erfindung nicht zu den entsprechenden vorteilhaften Eigenschaften des LiFePO₄-Pulvers führt, auch wenn versucht wird, vergleichbare Teilchengrößenverteilungen zu erhalten.

Es wird angenommen, ohne dass die Erfindung auf diesen theoretischen Mechanismus beschränkt wäre, dass bei der Dispergier- oder Mahlbehandlung gemäß der Erfindung insbesondere die sich zunächst bei der Herstellung der Mischsuspension bildenden großen Kristallagglomerate verhindert werden, oder zumindest nach der Bildung verkleinert werden. Diese Kristallagglomerate können auch (teilweise) auf Phosphate von Li⁺ und M²⁺ als Zwischenprodukte zurück zu führen sein, die je nach Konzentration aufgrund der Ausbildung von größeren Kristallplättchen bzw. -agglomeraten zu einem Anstieg der Viskosität führen können. Nach einer besonders bevorzugten erfindungsgemäßen Ausführungsform können somit für die Dispergierbehandlung der Precursormischung bzw. - suspension auch solche Vorrichtungen verwendet werden, deren hohe Mischwirkung (oder Scherwirkung) ausreicht, um die Ausbildung großer Kristallite oder Kristallitagglomerate in der Mischung bzw. Suspension zu verhindern und gleichzeitig zu einer hohen Keimbildungsrate zu führen. Nicht-beschränkende Beispiele geeigneter Vorrichtungen wurden bereits vorstehend genannt.

Die genannten Kristallaggregate oder Kristallplättchen können auch durch eine Fällung eines definierten Vorproduktes (Precursors) aus einer löslichen Li⁺-Quelle, einer löslichen M²⁺-Quelle und der (löslichen) PO₄³⁻-Quelle entstehen. Im nachstehenden Erfindungsbeispiel wird z.B. eine wässrige Lösung einer Fe²⁺-Quelle, insbesondere einer wässrigen Lösung von Eisen(II)sulfat-Heptahydrat, FeSO₄ · 7 H₂O, und einer flüssigen PO₄³⁻-Quelle, insbesondere 85%-iger Phosphorsäure, vorgelegt, und bei langsamer Zugabe einer wässrigen Li⁺-Quelle, insbesondere einer wässrigen LiOH-Lösung, ein frischer Niederschlag von Vivianit (Fe₃(PO₄)₂-Hydrat) gefällt. Es ist dabei vorzuziehen, dass die Dispergier- oder Mahlbehandlung bereits vom Beginn der ersten Kristallbildung bis zum Abschluss der Fällung die Bildung von großen Kristallplättchen bzw. Kristallagglomeraten verhindert bzw. diese verkleinert. Vor einer anschließenden bevorzugten Hydrothermalbehandlung liegt dann unter Verwendung des Dispergier- oder Mahlaggregats eine homogene Precursormischung bzw. -suspension, vorzugsweise mit einem Feststoffanteil enthaltend Vivianit (ggf. imprägniert mit Li⁺-ionen), Lithiumphosphat und/oder Eisenhydroxide, vor. Diese(s) Zwischenprodukt(e) muss (müssen) nicht isoliert werden. Bevorzugt kann die Zusammengabe und/oder die Fällung der Precursormischung bzw. -suspension bereits im Hydrothermalbehälter ausgeführt werden (Ein-Topfverfahren).

Durch die Dispergier-oder Mahlbehandlung gemäß der Erfindung wird somit gewährleistet, dass die Fällung sehr homogen abläuft und eine homogene Mischung aus vielen kleinen, etwa gleichgroßen Kristallkeimen entsteht. Diese Kristallkeime können anschließend, insbesondere bei einer anschließenden Hydrothermalbehandlung zu sehr gleichmäßig gewachsenen Kristallen des Endproduktes ZiMPO₄ mit einer sehr engen Partikelgrößenverteilung umgesetzt werden. Prinzipiell ist im Rahmen der Erfindung anstelle der Hydrothermalbehandlung auch, gegebenenfalls nach Abtrennung der Mutterlauge z.B. durch Filtrieren und/oder Zentrifugieren, ein Trocknen und ggf. Sintern des Niederschlags aus der Precursormischung nach der erfindlungsgemäßen Dispergier- oder Mahlbehandlung möglich. Die Hydrothermalbehandlung ist jedoch bevorzugt und liefert die besten Ergebnisse.

Um den gewünschten Effekt zu erzielen, kann die Dispergier- oder Mahlbehandlung gemäß der Erfindung also vorzugsweise vor oder während der Fällung eines Niederschlags aus der Precursormischung einsetzen, um die Bildung großer Kristallkeime oder -agglomerate zu verhindern bzw. diese zu zerkleinern und zu homogenisieren. Dabei soll ein D90-Wert der Teilchen in der Suspension von weniger als 50 µm erreicht werden. Bevorzugt wird ein D90-Wert der Teilchen in der Precursorsuspension von maximal 25 µm, insbesondere maximal 20 µm, besonders bevorzugt maximal 15 µm, da hiermit die besten Eigenschaften des fertigen Produktes beobachtet wurden..

Nach einer erfindungsgemäßen Ausführungsform kann die Dispergier- oder Mahlbehandlung gemäß der Erfindung auch nach der Fällung eines Niederschlags aus der Precursormischung einsetzen, sofern der o.g. D90-Wert erreicht wird.

Es wurde auch überraschend gefunden, dass die Dispergier- oder Mahlbehandlung gemäß der Erfindung vorzugsweise vor der endgültigen Umsetzung zum Lithiumeisenphosphat, insbesondere vor Abschluss einer sich an die Fällung der Precursormischung anschließenden Hydrothermalbehandlung erfolgen sollte, um optimale Ergebnisse zu erzielen. Als Dispergier- oder Mahlbehandlung gemäß der Erfindung wird jedoch sowohl eine Behandlung einer Precursormischung vor als auch während einer Hydrothermalbehandlung angesehen.

Ein wesentlicher Vorteil des erfindungsgemäßen Verfahrens ist es, dass die Teilchengrößenverteilung des hergestellten LiMPO₄ besonders gut reproduzierbar gesteuert werden kann, und somit auch die guten elektrochemischen Eigenschaften ohne große Schwankungen stabil eingehalten werden können.

Bei der vorliegenden Erfindung ist die Wahl der Li⁴-Quelle, der M²⁺-Quelle und der PO₄³⁻-Quelle grundsätzlich nicht beschränkt. Es können alle dem Fachmann geläufigen oder als geeignet erscheinenden Ausgangsmaterialien verwendet werden. Es können verschiedenste Lithiumverbindungen, zweiwertige Verbindungen von M und Phosphorsäureverbindungen passend kombiniert als Synthesegrundmaterialien eingesetzt werden. Bevorzugt sind lösliche Salze oder Verbindungen von Li und M sowie flüssige oder lösliche PO₄-Quellen. Als Beispiele für geeignete Lithiumverbindungen können, ohne Beschränkung, u.a. Lithiumfluorid, Lithiumchlorid, Lithiumbromid, Lithiumiodid, Lithiumcarbonat, Lithiumhydroxid oder Lithiumphosphat angeführt werden. Besonders bevorzugt ist LiOH.

Als Beispiele für zweiwertige Verbindungen von M, hier beispielsweise mit M = Fe können, ohne Beschränkung, u.a. Eisenfluorid, Eisenchlorid, Eisenbromid, Eiseniodid, Eisensulfat, Eisenphosphat, Eisennitrat, Organylsalze von Eisen wie Eisenoxalat oder Eisenacetat angeführt werden. Eisensulfat ist besonders bevorzugt. Falls M ein anderes Metall als Fe darstellt, können die analogen Verbindungen verwendet werden.

Als Beispiele für Phosphorsäureverbindungen können, ohne Beschränkung, u.a. Orthophosphorsäure, Metaphosphorsäure, Pyrophosphorsäure, Triphosphorsäure, Tetraphosphorsäure, Hydrogenphosphate oder Dihydrogenphosphate wie Ammoniumphosphat oder Ammoniumdihydrogenphosphat, Lithiumphosphat oder Eisenphosphat oder beliebige Mischungen daraus angeführt werden. Phosphorsäure ist besonders bevorzugt.

Bei Verwendung von LiOH als Li⁺-Quelle sowie Phosphorsäure als PO₄³⁻-Quelle kann zudem durch die Zugabe von LiOH die Phosphorsäure neutralisiert und somit die Fällung in der Precursormischung eingeleitet werden.

Als Precursormischung wird erfindungsgemäß jede flüssige oder fluide Mischung enthaltend mindestens eine Li⁺-Quelle, mindestens eine M²⁺-Quelle und mindestens eine PO₄³⁻Quelle angesehen. Als Precursorsuspension wird erfindungsgemäß jede flüssige oder fluide Precursormischung nach zumindest teilweiser Fällung eines Niederschlags angesehen. Der Niederschlag kann LiMPO₄ oder Zwischenprodukte enthalten.

In der Regel wird die Precursormischung ein Lösungsmittel enthalten, insbesondere ein polares Lösungsmittel. Als polares Lösemittel können beispielsweise Wasser, Methanol, Ethanol, 2-Propanol, Ethylenglykol, Propylenglykol, Aceton, Cyclohexanon, 2-Methylpyrrolidon, Ethylmethylketon, 2-Ethoxiethanol, Propylencarbonat, Ethylencarbonat, Dimethylcarbonat, Dimethylformamid oder Dimethylsulfoxid oder Gemische daraus angeführt werden. Wasser ist als Lösungsmittel bevorzugt. Es kann dann die erfindungsgemäß bevorzugte Nassfällung des LiMPO₄ aus wässriger Lösung erfolgen. Erfindungsgemäß kann also von den bekannten und dem Fachmann geläufigen Ausgangsstoffen bzw. -lösungen oder -suspensionen zur Herstellung des LiMPO₄ ausgegangen werden. Insbesondere können die für eine Nassfällung aus Lösungen bekannten Rezepturen und Verfahren verwendet werden, wobei die Dispergier- oder Mahlbehandlung erfindungsgemäß zusätzlich vorgesehen wird. Die Temperatur bei der Herstellung der Precursormischung bzw. der Zusammengabe der mindestens einen Li⁺-Quelle, der mindestens einen M²⁺-Quelle und/oder der mindestens einen PO₄³⁻-Quelle wird vorzugsweise im Bereich zwischen etwa 20 und 80°C, insbesondere zwischen 25 und 60°C, gewählt.

Nach einer bevorzugten Ausführungsform des erfindungsgemäßen Verfahrens erfolgt kein direktes Eindampfen oder Trocknen der Precursor-Mischung bzw. Precursorsuspension. Auch erfolgt nach einer bevorzugten Ausführungsform kein Sintern der Precursormischung bzw. Precursorsuspension, da hierdurch die Eigenschaften des erhaltenen Endproduktes negativ beeinflusst werden können. Vielmehr hat sich überraschend gezeigt, dass die besten Ergebnisse durch eine hydrothermale Behandlung der Precursormischung bzw. Precursorsuspension und anschließende Trocknung und gegebenenfalls Sinterung des fertig umgesetzten LiFePO₄ erhalten werden.

Unter einer Umsetzung der Precursormischung unter hydrothermalen Bedingungen wird im Rahmen der vorliegenden Erfindung jede Behandlung bei einer Temperatur über Raumtemperatur und einem Dampfdruck über 1 bar angesehen. Die Hydrothermalbehandlung an sich kann in dem Fachmann geläufiger und bekannter Weise durchgeführt werden. Vorzugsweise werden bei den hydrothermalen Bedingungen Temperaturen zwischen 100 bis 250°C, insbesondere 100 bis 180°C sowie ein Druck von 1 bar bis 40 bar, insbesondere 1 bar bis 10 bar Dampfdruck verwendet. Ein mögliches Hydrothermalverfahren ist beispielsweise in der JP 2002-151082 beschrieben, deren diesbezüglicher Offenbarungsgehalt hier durch Bezugnahme aufgenommen wird. Dabei wird nach einer Ausführungsform die Precursormischung in einem dicht verschlossenen bzw. druckbeständigen Gefäß zur Reaktion gebracht. Die Umsetzung erfolgt vorzugsweise in einer Inert- oder Schutzgasatmosphäre. Geeignete inerte Gase sind beispielsweise Stickstoff, Argon, Kohlendioxid, Kohlenmonoxid oder deren Gemische. Die Hydrothermalbehandlung kann beispielsweise über 0,5 bis 15 stunden, insbesondere über 3 bis 11 Stünden, durchgeführt werden. Nur als nicht beschränkendes Beispiel können folgende konkrete Bedingungen gewählt werden: 1,5 h Aufheizzeit von 50°C (Temperatur der Precursormischung) auf 160°C, 10 h Hydrothermalbehandlung bei 160°C, 3 h Abkühlung von 160°C auf 30°C.

Nach einer bevorzugten erfindungsgemäßen Ausführungsform wird zunächst in wässrigem Medium die M²⁺-Quelle und die PO4³-Quelle, insbesondere unter Inertgasatmosphäre, gemischt und anschließend, vorzugsweise wiederum unter Inertgasatmosphäre, die Li⁺-Quelle zugegeben. Spätestens mit Einsetzen der Fällung bei zunehmender Neutralisierung der Precursormischung wird dann die Dispergier- oder Mahlbehandlung begonnen und dann die Umsetzung unter hydrothermalen Bedingungen durchgeführt. An die Hydrothermalbehandlung kann sich nach einer erfindungsgemäßen Ausführungsform eine Abtrennung des LiMPO₄ aus der Suspension , z.B. über Filtration und/oder Zentrifugation, anschließen. Weiterhin kann nach einer erfindungsgemäßen Ausführungsform das abgetrennte LiMPO₄ gewaschen werden, insbesondere mit Wasser, um die Salzfracht zu verringern bzw. zu entfernen. Eine Trocknung und/oder Sinterung des LiMPO₄, insbesondere unter Schutzgasoder Inertatmosphäre, kann sich ebenfalls an die Hydrothermalbehandlung anschließen. Eine sorgfältige Trocknung/Nachtrocknung ist für die elektrochemische Qualität des Endproduktes in der Regel erforderlich, da schon geringe Feuchtigkeitsspuren bei der elektrochemischen Anwendung des Materials in Li-Akkumulatoren bzw. Li-Batterien Probleme, wie eine Zersetzung des Leitsalzes LiPF₆ bewirken können. Eine Sinterung kann optional vorgenommen werden.

Die Trocknung des LiMPO₄ kann über einen weiten Temperaturbereich von etwa 50 bis 750°C vorgenommen werden, wobei die Trocknungstemperatur auch von wirtschaftlichen Erwägungen abhängt. Falls die Herstellung des LiMPO₄ in Abwesenheit einer kohlenstoffhaltigen oder elektronenleitfähigen Substanz bzw. eines Vorläufers davon (vgl. unten) vorgenommen wird, wird in den meisten Fällen eine Trocknung zwischen etwa 50 und 350°C, beispielsweise über 3 h bei 250°C unter Verwendung von Stickstoff 5,0, Vakuum oder Formiergas, ausreichend sein.

Soweit die Herstellung des LiMPO₄ in Anwesenheit einer kohlenstoffhaltigen oder elektronenleitfähigen Substanz bzw. eines Vorläufers davon (vgl. unten) durchgeführt wird, um ein Precoating mit Kohlenstoff zu bewirken, wird in der Regel eine höhere Trocknungstemperatur, in der Regel oberhalb von 500 bzw. 700°C, gewählt. Insbesondere kann eine Sinterung erfolgen, wobei beispielsweise 3 h bei etwa 750°C unter Verwendung von Stickstoff 5.0 erhitzt werden kann. Erst bei ausreichend hohen Temperaturen erhält man dabei den gewünschten leitfähigen Überzug aus der kohlenstoffhaltigen bzw. elektronenleitfähigen Substanz.

Nach einer bevorzugten erfindungsgemäßen Ausführungsform liegen die Komponenten der Precursormischung in folgendem stöchometrischen Verhältnis vor:
a. 1 mol Fe²⁺ : 1 mol PO₄³⁻ : 1 mol Li* (1:1:1)
b. 1 mol Fe²⁺ : 1 mol PO₄³⁻ : 3 mol Li* (1:1:3)
c. jedes Mischungsverhältnis zwischen a und b

Vorzugsweise liegt zumindest das Molverhältnis von M²⁺ Eisenionen zu PO₄³⁻ bei etwa 1:1 . Die vorstehenden stöchiömetrischen Verhältnisse sind auch aus wirtschaftlichen Gründen bevorzugt, jedoch nicht zwingend. Gerade im Hydrothermalverfahren bildet sich LiMPO₄ als thermodynamisch stabilste Phase bevorzugt aus, zudem können Abweichungen von den o.g. Verhältnissen zur Beeinflussung der Fällungs- oder Morphologieeigenschaften im Einzelfall sogar beabsichtigt sein. In der Regel können auch Abweichungen von 20%, zumindest von etwa 10% von den vorstehenden stöchiometrischen Verhältnissen toleriert werden.

Das Hydrothermalverfahren bietet auch Vorteile im Hinblick auf einen stark reduzierten Schutzgasbedarf im Vergleich zu einem alternativ möglichen Sinterverfahren aus einer trockenen Pulvervormischung oder Precursormischung. Außerdem wurde überraschend gefunden, dass die Partikelmorphologie und Partikelgrößenverteilung sehr viel gezielter als bei einem reinen Sinterverfahren gesteuert werden kann.

Zu große LiFePO₄ Partikel führen bei hohen Lade-Entladeraten (hohe Lade-/Entladeströmen) zu einer kinetisch kontrollierten Begrenzung der einem Akkumulator entnehmbaren Kapazität, d.h. die Lithium-Ionen könne beim Entladen nicht mehr schnell genug durch die Grenzschicht LiFePO₄/FePO₄ wandern, die spezifische Kapazität der Elektrode fällt bei hohen Lade-/Entladeraten stark ab, Für einen kommerziellen Einsatz des Lithiumeisenphosphats ist aber eine ausreichende spezifische Kapazität auch bei hohen Lade-/Entladeströmen wichtig.

Die Untersuchungen der Erfinder haben auch gezeigt, dass man auch durch bloße Nachvermahlung und/oder Sichtung des fertigen, ohne die erfindungsgemäße Dispergier- oder Mahlbehandlung hergestellten LiMPO₄ weder die gleiche geringe Teilchengröße und enge Teilchengrößenverteilung, noch die hervorragenden elektrochemischen Eigenschaften erzielen kann. Dies gilt auch gegenüber LiM-PO₄, das nur durch direkte Sinterung einer Pulver-Precursor-mischung hergestellt worden ist. Es wird angenommen, dass dies auf die gleichmäßigen und kleinen Kristallisationskeime zurückzuführen ist, die durch die Dispergier- oder Mahlbehandlung gemäß der Erfindung erzeugt werden und der Umsetzung zum fertigen LiMPO₄-Produkt zugrunde liegen. Die dadurch erhaltene feinteilige und gleichmäßige Teilchengröße wirkt sich auch im Falle einer Trocknung bzw. Sinterung des nach dem erfindungsgemäßen Verfahren hergestellten LiMPO₄ positiv aus.

Ein weiterer Aspekt der vorliegenden Erfindung betrifft daher LiMPO₄, das nach dem vorstehend beschriebenen Verfahren erhältlich ist. Dieses Material weist vorzugsweise einen D₉₀-Wert der Teilchen von maximal 25 µm, insbesondere maximal 20 µm, besonders bevorzugt maximal 15 µm auf. Die mittlere (durchschnittliche) Teilchengröße (D50-Wert) liegt bei weniger als 0,8 µm, vorzugsweise bei weniger als 0,7 µm, insbesondere bei weniger als 0,6 µm, besonders bevorzugt bei weniger als 0,5 µm. Die Teilchengrößenverteilung ist vorzugsweise zumindest weitgehend eine Normalverteilung (monomodal). Der D10-Wert liegt nach einer Ausführungsform bei weniger als 0,35 µm, vorzugsweise bei weniger als 0,40 µm, kann jedoch bei engen Teilchengrößenverteilungen in Abhängigkeit vom dem D90-Wert auch höher liegen. Der D90-Wert liegt vorzugsweise bei weniger als 3,0 µm, vorzugsweise bei weniger als 2,5 µm, insbesondere bei weniger als 2,0 µm.

Die Partikelgrößenverteilung des erfindungemäßen LiMPO₄ ist, wie vorstehend erwähnt vorzugsweise sehr eng, wobei nach einer besonders bevorzugten Ausführungsform die Differenz zwischen dem D90-Wert und dem D10-Wert nicht mehr als 2 µm, vorzugsweise nicht mehr als 1,5 µm, insbesondere nicht mehr als 1 µm, besonders bevorzugt nicht mehr als 0,5 µm beträgt.

Es hat sich überraschend gezeigt, dass die vorstehend beschriebenen Vorteile des erfindungsgemäßen LiMPO₄ auch bei der anschließenden Verarbeitung mit anderen Komponenten, z.B. von kohlehaltigen Materialien bei der Herstellung von Elektrodenmaterialien besondere Vorteile bieten. So ermöglicht das erfindungsgemäße LiMPO₄ offenbar aufgrund seiner besonderen Teilchengrößenverteilung wie hierin definiert eine bessere und leichtere Verarbeitung zu Elektrodenmaterialien und einen besonders innigen Verbund z.B. mit den kohlehaltigen Leitmaterialien. Noch ein weiterer Aspekt der vorliegenden Erfindung betrifft daher eine Zusammensetzung, insbesondere Elektrodenmaterial, enthaltend LiMPO₄ wie hierin definiert.

Ein weiterer Aspekt der vorliegenden Erfindung betrifft die Verwendung eines LiMPO₄-Materials wie vorstehend definiert in einem Lithiumakkumulator oder einer sekundären (wiederaufladbaren) Li-Batterie als Elektrodenmaterial. Vorzugsweise sind die Primärpartikel (=Kristallite) des fertigen LiMPO₄-Produkts in REM-Aufnahmen nach Größe und Morphologie weitgehend einheitlich. Nicht nach dem erfindungsgemäßen Verfahren hergestelltes LiMPO₄ weisen dagegen uneinheitlich große Primärpartikel oder uneinheitliche Kristallmorphologien auf.

Nach einer bevorzugten erfindungsgemäßen Ausführungsform erfolgt die Herstellung oder Fällung der Precursor-Mischung und/oder die Umsetzung unter hydrothermalen Bedingungen in Anwesenheit weiterer Komponenten, insbesondere einer elektronenleitfähigen Substanz. Dabei kann es sich vorzugsweise um einen kohlenstoffhaltigen Feststoff wie Kohle, insbesondere Leitkohle oder Kohlefasern handelt. Es kann auch ein Vorläufer einer elektronenleitfähigen Substanz bzw. des kohlenstoffhaltigen Feststoffs eingesetzt werden, der sich bei der Trocknung bzw. Sinterung des LiMPO₄ in Kohlenstoffpartikel umwandelt, wie eine Zuckerverbindung. Weitere Beispiele geeigneter organischer Verbindungen sind in der WO02/083555 genannt, deren diesbezüglicher Offenbarungsgehalt durch Bezugnahme hier aufgenommen wird. Vorzugsweise sind die in dem fertigen LiMPO₄-Produkt enthaltenen Kohlenstoffpartikel homogen verteilt. Nach einer besonders bevorzugten erfindungsgemäßen Ausführungsform wird der eingesetzte kohlenstoffhaltige Feststoff als Kristallisatiohskeim in der Umsetzung der Precursor-Mischung verwendet.

prinzipiell ist jedoch jedes dem Fachmann geläufige Verfahren zur Einbringung von Kohle oder kohlenstoffhaltigem, elektrisch leitfähigen Material bzw. zur Vermischung mit weiteren Komponenten geeignet. Auch eine intensive Vermischung oder Vermahlen des fertigen LiMPO₄ mit mindestens einem kohlenstoffhaltigen Feststoff wie Leitkohle ist möglich. Weitere mögliche Verfahren sind das Aufziehen von Kohlepartikeln auf die Oberfläche der LiMPO₄-Partikel in einer wässrigen oder nicht-wässrigen Suspension oder die Pyrolyse eines Gemenges aus LiMPO₄-Pulver und einem Kohlenstoff-Vorläufermaterial. Das beispielsweise so erhaltene kohlenstoffhaltige LiMPO₄ enthält in der Regel bis zu 10 Gew.-%, vorzugsweise bis zu 5 Gew.-%, besonders bevorzugt bis 2,5 Gew.-% Kohlenstoff, bezogen auf das LiMPO₄.

Technisch bevorzugt ist ein Pyrolyse-Verfahren, bei dem mindestens ein Kohlenstoff-Vorläufermaterial, vorzugsweise ein Kohlenhydrat, wie Zucker oder Cellulose und besonders bevorzugt Lactose mit dem erfindungsgemäßen LiMPO₄-Pulver vermengt wird, z. B. durch Verkneten, wobei Wasser als Hilfsmittel zugegeben werden kann. Nach einer technisch besonders bevorzugten Ausführungsform wird das Kohlenstoff-Vorläufermaterial dem noch ungetrockneten feuchten LiMPO₄-Filterkuchen zugegeben. Anschließend wird die Mischung aus erfindungsgemäßem LiMPO₄-Pulver und Kohlenstoff-Vorläufermaterial an Schutzgas, an Luft oder im Vakuum bei Temperaturen von vorzugsweise 50°C bis 200°C getrocknet und an Schutzgas, wie z. B. Stickstoff 5.0 oder Argon auf eine Temperatur zwischen z.B. 500°C und 1000°C, bevorzugt zwischen 700°C und 800°C erhitzt, wobei das Kohlenstoff-Vorläufermaterial zu Kohle pyrolysiert wird. Anschließend erfolgt vorzugsweise eine Mahloder Deagglomerationsbehandlung.

Nach einer weiteren bevorzugten erfindungsgemäßen Ausführungsform liegt die BET-Oberfläche des verwendeten LiMPO₄ bei mehr als etwa 3,5 m²/g, insbesondere mehr als etwa 4 m²/g, besonders bevorzugt mehr als 5 m²/g, mehr als 10 m²/g oder sogar mehr als 15m²/g, bestimmt nach DIN 66131 (Mehrpunkt-Bestimmung).

Eine Verbesserung der Eigenschaften des LiFePO₄ durch ein Precoating mit Kohlenstoff ist auch beschrieben in: Ravet et al., Abstract No. 127, 196th ECS-Meeting, Honolulu, Hl, Oct. 17-22 (1999).

Der Kohleanteil verbessert auch die Verarbeitbarkeit des LiMP04-Pulvers zu Batterieelektroden durch Veränderung der Oberflächeneigenschaften und/oder verbessert die elektrische Anbindung in der Batterieelektrode.

Alternativ soll eine deutliche Verbesserung der elektronischen Leitfähigkeit durch gezielte Dotierung mit Mg²⁺, Al³⁺, Ti⁴⁺, Zr⁴⁺, Nb⁵⁺, W⁶⁺ möglich sein (S.Y. Chung, J.T. Bloking, Y.M. Chiang, Nature, Vol. 1, October 2002, 123).

Ein weiterer erfindungsgemäßer Aspekt betrifft einen Li-Akkumulator oder eine Li-Sekundärbatterie enthaltend das erfindungsgemäße, gegebenefalls kohlenstoffhaltige, LiMPO₄. Die Sekundärbatterie (Lithiumionen-Sekundärbatterie) als solche kann dabei auf an sich bekannte Weise hergestellt werden, beispielsweise wie nachstehend ausgeführt und in der JP 2002-151082 beschrieben. Dabei wird das wie oben erhaltene Lithiumeisenphosphat der vorliegenden Erfindung zumindest als ein Teil des Materials für den positiven Pol der Sekundärbatterie verwendet. In diesem Fall erfolgt zuerst eine Vermischung des Lithiumeisenphosphats der vorliegenden Erfindung mit, falls nötig, elektrisch leitfähigen Zusatzstoffen und einem Bindemittel gemäß einem üblichen Verfahren zur Herstellung der positiven Elektrode einer Sekundärbatterie. Die Sekundärbatterie wird dann aus dieser positiven Elektrode, und einem üblicherweise verwendeten Material für die negative Elektrode wie etwa metallischem Lithium oder einer schichtförmigen Kohlenstoffverbindung wie z.B. Graphit, ferner aus einer üblicherweise verwendeten nicht-wässrigen Elektrolytlösung, beispielsweise aus Propylencarbonat oder Ethylencarbonat o.ä., in dem ein Lithiumsalz wie LiBF₄ oder LIPF₆ gelöst ist, als Hauptbestandteile hergestellt.

### Bestimmung der Teilchengrößenverteilung:

Die Teilchengrößenverteilungen für die Precursorsuspensionen und das erzeugte LiMPO₄ wird anhand der Lichtstreuungsmethode unter Verwendung handelsüblicher Vorrichtungen bestimmt. Diese Methode ist dem Fachmann bekannt, wobei auch auf die Offenbarung hierzu in der JP 2002-151082 und der WO 02/083555 verwiesen und Bezug genommen wird. Vorliegend wurden die Teilchengrößenverteilungen mit Hilfe eines Laserbeugungsmessgerätes (auf Mastersizer S, Firma Malvern Instruments GmbH, Herrenberg, DE) und der Software des Herstellers (Version 2.19) mit einem Malvern Small Volume Sample Dispersion Unit, DIF 2002 als Messeinheit bestimmt. Es wurden folgende Messbedingungen gewählt: Compressed range; active beam length 2,4 mm; Messbereich: 300 RF; 0,05 bis 900µm. Die Probenvorbereitung und -messung erfolgte nach den Herstellerangaben.

Der D90-Wert gibt den Wert an, bei dem 90% der Teilchen in der gemessenen Probe einen kleineren oder gleichen Teilchendurchmesser aufweisen. Entsprechend geben der D50-Wert bzw. der D10-Wert den Wert an, bei dem 50% bzw. 10% der Teilchen in der gemessenen Probe einen kleineren oder gleichen Teilchendurchmesser aufweisen.

Nach einer besonders bevorzugten erfindungsgemäßen Ausführungsform gelten die in der vorliegenden Beschreibung genannten Werte für die D10-Werte, die D50-Werte, die D90-Werte sowie die Differenz der D90- und der D10-Werte bezogen auf den Volumenanteil der jeweiligen Teilchen am Gesamtvolumen. Danach geben die hierin genannten D10-, D50- und D90-Werte nach dieser erfindungsgemäßen Ausführungsform diejenigen Werte an, bei dem 10 Volumen-% bzw. 50 Volumen-% bzw. 90 Volumen-% der Teilchen in der gemessenen Probe einen kleineren oder gleichen Teilchendurchmesser aufweisen. Bei der Einhaltung dieser Werte werden erfindungsgemäß besonders vorteilhafte Materialien bereitgestellt und negative Einflüsse von relativ groben Teilchen (mit verhältnismäßig größerem Volumenanteil) auf die Verarbeitbarkeit und die elektrochemischen Produkteigenschaften vermieden. Besonders bevorzugt gelten die in der vorliegenden Beschreibung genannten Werte für die D10-Werte, die D50-Werte, die D90-Werte sowie die Differenz der D90- und der D10-Werte sowohl bezogen auf Prozent als auch Volumenprozent der Teilchen.

Bei Zusammensetzungen (z.B. Elektrodenmaterialien), die neben dem LiMPO₄ weitere Komponenten enthaltend, insbesondere bei kohlehaltigen Zusammensetzungen, kann die vorstehende Lichtstreuungsmethode zu irreführenden Ergebnissen führen, da die LiMPO₄-Teilchen (Partikel) durch das zusätzliche (z.B. kohlehaltige) Material zu größeren Agglomeraten verbunden sein können. Die Teilchengrößenverteilung des LiMPO₄ bei solchen Zusammensetzungen kann jedoch anhand von REM-Aufnahmen wie folgt bestimmt werden:

Eine kleine Menge der Pulverprobe wird in Aceton suspendiert und für 10 min mit Ultraschall dispergiert. Sofort danach werden einige Tropfen der Suspension auf einen Probenteller eines Rasterelektronenmikroskops (REM) getropft. Die Feststoffkonzentration der Suspension und die Anzahl der Tropfen werden so bemessen, dass sich eine weitgehend einlagige Schicht aus Pulverpartikeln (der Ausdruck "Partikel" wird als Synonym von "Teilchen" verwendet) auf dem Träger ausbildet, um ein gegenseitiges Verdecken der Pulverpartikel zu verhindern. Das Auftropfen muss rasch erfolgen, bevor sich die Partikel durch Sedimentation nach der Größe trennen können. Nach Trocknen an Luft wird die Probe in die Messkammer des REM überführt. Im vorliegenden Beispiel handelt es sich um ein Gerät des Typs LEO 1530, das mit einer Feldemissionselektrode bei 1,5kV Anregungsspannung und einem Probenabstand von 4 mm betrieben wird. Von der Probe werden mindestens 20 zufällig gelegte Ausschnittsvergrößerungen mit einem Vergrößerungsfaktor von 20000 aufgenommen. Diese werden jeweils auf einem DIN A4-Blatt mitsamt dem eingeblendeten Vergrößerungsmaßstab ausgedruckt. Auf jedem der mindestens 20 Blätter werden nach Möglichkeit mindestens 10 frei sichtbare LiMPO₄-Partikel, aus denen die Pulverpartikel zusammen mit dem kohlenstoffhaltigen Material aufgebaut sind, zufällig ausgewählt, wobei die Umgrenzung der LiMPO₄-Partikel durch das Fehlen fester, direkter Verwachsungsbrücken definiert wird. Verbrückungen durch Kohlenstoffmaterial hingegen werden zur Partikelgrenze gezählt. Von jedem dieser ausgewählten LiMPO₄-Partikel wird jeweils die in der Projektion längste und kürzeste Achse mit einem Lineal abgemessen, und anhand des Maßstabsverhältnisses auf die realen Partikelabmessungen umgerechnet. Für jedes ausgemessene LiMPO₄-Partikel wird der arithmetische Mittelwert aus der längsten und der kürzesten Achse als Partikeldurchmesser definiert. Anschließend teilt man die ausgemessenen LiMPO₄-Partikel in Analogie zur Lichtstreuungsmessung in Größenklassen ein. Trägt man die Anzahl der jeweils zugehörigen LiMPO₄-Partikel über der Größenklasse auf, erhält man die differentielle Partikelgrößenverteilung bezogen auf die Partikelanzahl. Werden die Partikelzahlen fortlaufend von den kleinen zu den großen Partikelklassen hin aufsummiert, erhält man die kumulierte Partikelgrößenverteilung, aus der D10, D50 und D90 auf der Größenachse direkt abgelesen werden können.

Das beschriebene Verfahren findet auch Anwendung auf LiMPO₄-haltige Batterieelektroden. In diesem Falle wird jedoch statt einer Pulverprobe eine frische Schritt- oder Bruchfläche der Elektrode auf dem Probenträger befestigt und im REM untersucht.

Die Erfindung wird nun anhand der nachstehenden nichtbeschränkenden Beispiele näher erläutert. Die anliegenden Figuren zeigen:
Fig. 1 die Teilchengrößenverteilung (volumenbezogen) eines erfindungsgemäß hergestellten LiMPO₄ gemäß Beispiel 1;
Fig. 2 die Teilchengrößenverteilung (volumenbezogen) eines nicht erfindungsgemäß hergestellten LiMPO₄ gemäß Beispiel 2;
Fig. 3 die Teilchengrößenverteilung (volumenbezogen) eines erfindungsgemäß hergestellten LiMPO₄ gemäß Beispiel 3.

### Beispiele:

### Beispiel 1: Herstellung von LiFePO₄ nach einem erfindungsgemä-Ben Verfahren einschließlich Hydrothermalbehandlung

### Reaktionsgleichung

FeSO₄ ·7 H₂O + H₃PO₄ + 3 LiOH H₂O→ LiFePO₄ + Li₂SO₄ + 11 H₂O

LiFePO₄ ist als fertiges Produkt bei Raumtemperatur an Luft ohne Oxidation lagerbar.

Bei der Herstellung von LiFePO₄ nach der angegebenen Reaktionsgleichung ist zu beachten, dass das LiFe^{II}PO₄ aus einer wässrigen Fe^{II}-Precursorlösung gefällt wird. Die Umsetzung und Trocknung/Sinterung ist daher unter Schutzgas oder Vakuum durchzuführen, um eine teilweise Oxidation von Fe^{II} zu Fe^{III} unter Bildung von Nebenprodukten wie Fe₂O₃ oder FePO₄ zu vermeiden.

### Herstellung und Fällung einer Precursormischung

417,04 g FeSO₄ · 7 H₂O werden in ca. 11 destilliertem Wasser gelöst und langsam unter Rühren 172,74 g 85%ige Phosphorsäure zugegeben. Anschließend wird mit destilliertem Wasser auf 1,5 1 aufgefüllt. Die saure Lösung wird im Laborautoklaven (Volumen: 1 Gallone) bei 400 UPM Rührergeschwindigkeit vorgelegt, der Autoklav über das Tauchrohr mit ca. 6 - 7 bar Stickstoff beaufschlägt und über das Entlüftungsventil wieder entspannt. Die Prozedur wird 2 x wiederholt.

188,82 g Lithiumhydroxid LiOH · H₂O werden in 11 destilliertem Wasser gelöst.

Am Autoklaven wird zur Durchführung der Dispergier- oder Mahlbehandlung gemäß der vorliegenden Erfindung ein Dispergator (Firma IKA, ULTRATURRAX® UTL 25 Basic Inline mit Dispergierkammer DK 25.11) zwischen Entlüftungsventil und Bodenablassventil angeschlossen. Die Pumprichtung des Dispergators ist Bodenablassventil - Dispergator - Entlüftungsventil. Der Dispergator wird auf mittlerer Leistungsstufe (13500 UPM) nach den Angaben des Herstellers gestartet.

Anschließend wird die vorbereitete LiOH-Lösung mit einer Prominent-Membranpumpe über das Tauchrohr in den Autoklaven gepumpt (Hub 100%, 180 Hübe/Minute; entspricht höchster Leistung der Pumpe) und mit ca. 500 bis 600 ml destilliertem Wasser nachgespült. Der Vorgang dauert etwa 20 Minuten, wobei die Temperatur der entstandenen Suspension auf ca. 35°C steigt. Nach Zupumpen und Nachspülen wird die Suspension im Autoklaven auf 50°C erhitzt. Nach Zugabe des Lithiumhydroxids fällt ein grünlichbrauner Niederschlag aus.

Der Dispergator, der vor Beginn der LiOH-Zugabe gestartet wird, wird insgesamt etwa 1 Stunde zur Intensivmischung bzw. Vermahlung der entstandenen, sehr viskosen Suspension eingesetzt (nach Zupumpen der LiOH-Lösung bei 50°C). Die Teilchengröße lag danach bei D90= 13,2 µm. Der volumenbezogene D90-Wert lag entsprechend.

Zur Messung der Teilchengrößen in der Precursorsuspension kann wie folgt vorgegangen werden: Unter Bezugnahme auf die vor den Beispielen angegebene Methode zur Bestimmung der Teilchengrößen (verteilung) werden 20 bis 40 mg der Suspension in 15 ml Wasser suspendiert und 5 min mit einem Ultraschallfinger (Nennleistung 25 Watt, 60% Leistung) dispergiert. Anschließend wird sofort in der Messeinheit gemessen. Die richtige Einstellung der Probenmenge kann im Einzelfall anhand der Anzeige am Messgerät (grüner Messbereich) überprüft werden.

Der Einsatz eines Dispergators bewirkt eine Intensivmischung und Deagglomerierung der gefällten viskosen Vormischung. Bei der dabei ablaufenden Fällung und Kristallisation der Precursorsuspension entsteht durch die Vorvermahlung bzw. Intensivvermischung im Dispergator eine homogene Mischung aus vielen kleinen, etwa gleich großen Kristallkeimen. Diese Kristallkeime kristallisieren bei der anschließenden Hydrothermalbehandlung (siehe unten) zu sehr gleichmäßig gewachsenen Kristallen des Endprodukts LiFePO₄ mit einer sehr engen Partikelgrößenverteilung. Der Leistungs- bzw. Energieeintrag über die Dispergierbehandlung lag bei mehr als 7 kW/m³ bzw. mehr als 7 kWh/m³ der behandelten Precursormischung/-suspension.

### Hydrothernmalbehandlung:

Die jeweils frisch hergestellte Suspension wird im Laborautoklaven hydrothermal behandelt. Vor dem Aufheizen der Suspension wird der Autoklav mit Stickstoff gespült, um vorhandene Luft vor dem Hydrothermalprozess aus dem Autoklaven zu verdrängen. LiFe-PO₄ bildet sich ab Hydrothermaltemperaturen von etwa 100 bis 120°C. Nach dem Hydrothermalprozess wird das Material mit dem Seitz-Filter abfiltriert und gewaschen. Im einzelnen:

Nach Abschalten und Abklemmen des Dispergators wird der Ansatz in 1,5 Stunden auf 160°C erhitzt und eine Hydrothermalbehandlung über 10 Stunden bei 160°C durchgeführt. Anschließend wird in 3 Stunden auf 30°C abgekühlt.

Danach kann das LiFePO₄ ohne sichtbare Oxidation an Luft oder im Trockenschrank, z.B. bei milden Temperaturen (40°C) getrocknet werden.

Es kann jedoch auch eine Weiterverarbeitung des wie vorstehend beschrieben erhaltenen Materials erfolgen:

### Filtration des Lithiumeisenphosphats LiFePO₄

Nach der Hydrothermalbehandlung wird die abgekühlte Suspension (max. 30°C) unter Stickstoffatmosphäre durch das Bodenablassventil des Autoklaven in einen Druckfilter gepumpt (sog. "Seitz-Filter"). Dabei wird die Prominent-Membranpumpe so eingestellt, dass ein Druck von 5 bar nicht überschritten wird. Der Filterkuchen wird so lange mit destilliertem Wasser nachgewaschen, bis die Leitfähigkeit des Waschwassers 200 µS/cm unterschreitet.

### Trocknung und Deagglomeration des Lithiumeisenphosphats LiFePO₄

Der Filterkuchen wird im Vakuumtrockenschrank bei 70°C über Nacht auf eine Restfeuchte unter 5% vorgetrocknet und anschließend in einem Schutzgasofen ("Linn KS 80-S") unter einem Formiergasstrom (90% N₂/10% H₂) von 2001/h bei 250°C auf eine Restfeuchte <0,5% nachgetrocknet. Anschließend wird das LiFePO₄ in einer Labor-Rotormühle ("Fritsch Pulverisette 14") mit einem 0,08 mm Sieb deagglomeriert.

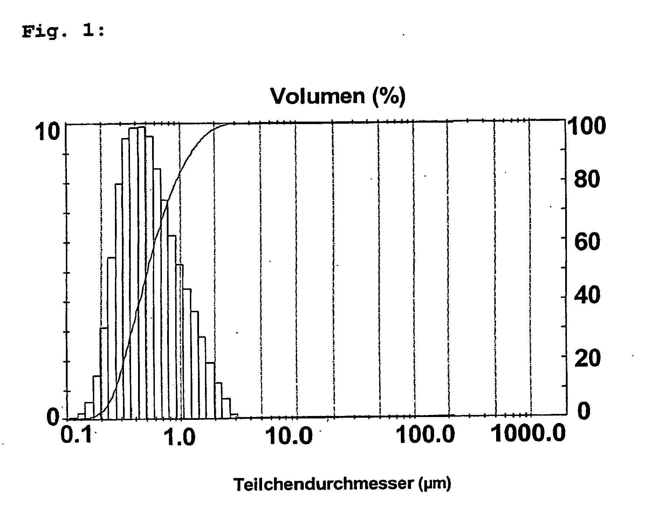

Die sich dabei ergebende typische Partikelgrößenverteilung des fertigen LiFePO₄ (mit Dispergator-Behandlung, nach Hydrothermalbehandlung, Trocknen und Deagglomeration wie vorstehend beschrieben) ist aus Fig. 1 ersichtlich. Zur Verdeutlichung der vorteilhaften Partikelgrößenverteilung und der Abwesenheit der störenden größeren Partikel in den erfindungsgemäßen Produkten sind die volumenbezogenen Daten dargestellt. Die auf den Teilchenanteil (%) bezogenen Werte waren wie folgt: D50-Wert kleiner 0,5 µm; D10-Wert kleiner 0,35 µm; D90-Wert kleiner 2,0 µm; Differenz zwischen dem D90-Wert und dem D10-Wert kleiner 1,5 µm.

Zur Messung der Teilchengrößen in einer pulverförmigen Probe kann wie folgt vorgegangen werden: Unter Bezugnahme auf die vor den Beispielen angegebene Methode zur Bestimmung der Teilchengrößen(verteilung) werden 20 bis 40 mg der Pulverprobe in 15 ml Wasser suspendiert und 5 min mit einem Ultraschallfinger (Nennleistung 25 Watt, 60% Leistung) dispergiert. Anschließend wird sofort in der Messeinheit gemessen. Die richtige Einstellung der Probenmenge kann im Einzelfall anhand der Anzeige am Messgerät (grüner Messbereich) überprüft werden.

### Beispiel 2: Herstellung von LiFePO₄ ohne Dispergatorbehandlung (Vergleich)

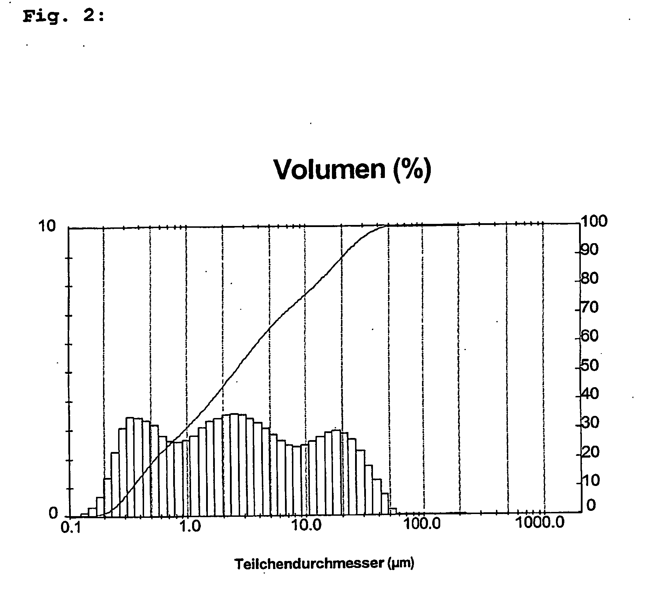

Zum Vergleich wurde LiFePO₄ nach dem gleichen Syntheseverfahren wie in Beispiel 1 beschrieben hergestellt, jedoch ohne erfindungsgemäßen Einsatz des Dispergators. Es wurde unter sonst gleichen Reaktionsbedingungen eine deutlich breitere Partikelgrößenverteilung mit einem größeren Anteil an verwachsenen Agglomeratstrukturen erhalten. Ohne den Einsatz eines Dispergators lag der D₉₀-Wert (auf Volumenanteil oder auf Teilchenzahl bezogen) nach Zugabe der LiOH-Lösung bei mehr als 200 µm. Die trotz der ebenfalls erzielten Phasenreinheit des LiFePO₄ deutlich gröbere Partikelgrößenverteilung des fertigen LiFePO₄ (nach Hydrothermalbehandlung, Trocknen und Deagglomeration) ist in Fig. 2 dargestellt. Zur Verdeutlichung der Anwesenheit störender größerer Partikel sind die volumenbezogenen Daten dargestellt. Der auf den Teilchenanteil (%) bezogene D50-Werte lag über 0,8 µm.

Auch ein gemäß der US2003/0124423, Seite 10, Absatz [0015], hergestelltes LiFePO₄ konnte trotz intensiver Vermahlung mit einem Mörser nicht auf die Teilchengrößenverteilung der erfindungsgemäßen Produkte gebracht werden; es konnte kein D50-Wert kleiner 0,8 µm und keine Differenz des D90- und des D10-Wertes von 2 µm oder darunter erzielt werden.

### Beispiel 3: Herstellung von LiFePO₄ nach einem erfindungsgemä-Ben Verfahren einschließlich Hydrothermalbehandlung

Es wurde LiFePO₄ nach dem gleichen Syntheseverfahren wie in Beispiel 1 beschrieben hergestellt, jedoch wurde der Dispergator (Firma IKA, ULTRATURRAX® UTL 25 Basic Inline mit Dispergierkammer DK 25.11) auf der höchsten Leistungsstufe betrieben. Der Leistungs- bzw. Energieeintrag über die Dispergierbehandlung lag bei mehr als 10 kW/m³ bzw. mehr als 10 kWh/m³ der behandelten Precursormischung/-suspension. Die Teilchengröße der Suspension nach der Dispergatorbehandlung lag bei D₉₀= 10,8 µm. Der volumenbezogene D90-Wert lag etwas darunter.

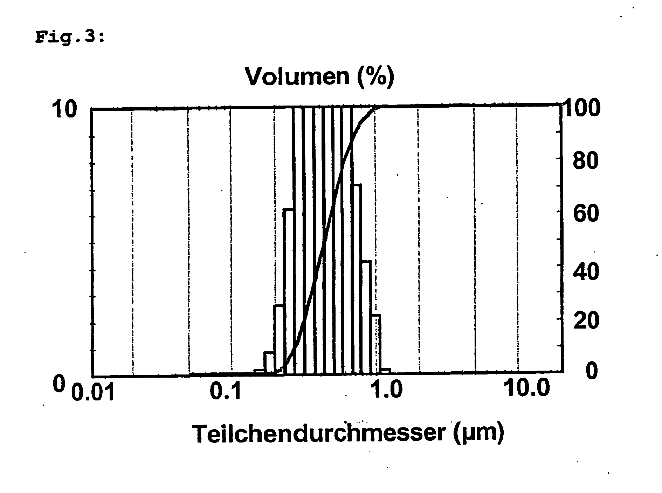

Die Hydrothermalbehandlung, Filtration, Trocknung und Deagglomeration erfolgte wie in Beispiel 1 angegeben. Die sich dabei ergebende typische Partikelgrößenverteilung des fertigen LiFePO₄ ist aus Fig. 3 ersichtlich. Zur Verdeutlichung der vorteilhaften Partikelgrößenverteilung und der Abwesenheit der störenden größeren Partikel in den erfindungsgemäßen Produkten sind die volumenbezogenen Daten dargestellt. Die auf den Teilchenanteil (%) bezogenen Werte waren wie folgt: D50-Wert kleiner 0,5 µm; D10-Wert kleiner 0,35 µm; D90-Wert kleiner 2,0 µm; Differenz zwischen dem D90-Wert und dem D10-Wert kleiner 1,0 µm.

In elektrochemischen Tests zeigte das unter Verwendung des Dispergators hergestellte erfindungsgemäße LiFePO₄ gegenüber dem ohne Verwendung eines Dispergators hergestellten Vergleichsmaterial sowie einem durch ein reines Sinterverfahren gemäß Stand der Technik hergestellten Material die besten Eigenschaften, insbesondere bei hohe Lade/Entladeraten.

### Beispiel 4: Herstellung von LiFePO₄ nach einem erfindungsgemä-Ben Verfahren einschließlich Hydrothermalbehandlung

21,894 kg FeSO₄* 7H₂O werden in 42 1 deionisiertem Wasser gelöst und langsam unter Rühren 9,080 kg 85%ige Phosphorsäure zugegeben. Die saure Lösung wird in einem emaillierten 2001 Autoklaven mit Ankerrührer vorgelegt und bei 45 UPM gerührt. Der Kopfraum des Autoklaven wird vor dem Verschließen mit Stickstoff gespült. Die saure Lösung wird über eine Kreiselpumpe mit ca. 5kW Leistungsaufnahme und mit einer gemessenen Durchflüssleistung von durchschnittlich 70001/h umgepumpt. Dabei wird die Lösung huber das Bodenablassventil des Autoklaven entnommen und über einen Deckelflansch wieder zugeführt. 10,289 kg LiOH*H₂O werden in 621 deionisiertem Wasser gelöst. Diese alkalische Lösung wird über eine Monopumpe und eine Injektordüse der umgepumpten sauren Lösung auf oder Druckseite der Kreiselpumpe zugeführt. Dieser Vorgang dauert 15 min, wobei die Temperatur der umgepumpten Lösung von 18,3°C auf 42,1°C ansteigt. Die dabei entstehende Suspension wird weiter für 45 min mit der Kreiselpumpe umgepumpt und mit dem Ankerrührer bei 45 UPM gerührt, wobei sich die Temperatur auf 51,1°C weiter erhöht. Die Kreiselpumpe sorgt erfindungsgemäß während des gesamten Vorganges mit ihrer hohen Turbulenzwirkung für die Bildung einer feinteiligen Suspension, wobei vergleichbare Teilchengrößenverteilungen wie in Beispiel 1 erzielt werden konnten. Der Leistungs- bzw. Energieeintrag über die Dispergierbehandlung lag bei mehr als 7 kW/m³ bzw. mehr als 7 kWh/m³ der behandelten Precursormischung/-suspension.

Nach Abschalten und Abklemmen der externen Geräte wird der Autoklav druckfest verschlossen und unter ständigem Rühren bei 90 UPM in 1,5h auf 160°C aufgeheizt und für 10h auf dieser Temperatur gehalten. Danach wird er innerhalb von 3h auf 20°C abgekühlt und die fertige LiFePO₄-Suspension analog zu Beispiel 1 im "Seitz-Filter" filtriert. Der pH-Wert des Filtrats liegt bei 7,5. Anschließend wird mit deionisiertem Wasser gewaschen, bis das Filtrat einen Leitwert von weniger als 480µS hat. Der weißlich-graue, feste und zum Zerfließen neigende Filterkuchen wird bei 70°C über Nacht im Vakuumtrockenschrank bei <100mbar getrocknet und in einer Labor-Rotormühle ("Fritsch Pulverisette 14") mit einem 0,08mm Sieb deagglomeriert. Die danach erhaltenen Teilchengrößenverteilungen lagen im selben Bereich wie in Beispiel 1 angegeben.

### Beispiel 5: Verkohlung eines nach dem erfindungsgemäßen Verfahren hergestellten Materials

1kg trockenes LiFePO₄ Pulver aus den Beispielen 1 bis 4 werden mit 112 g Lactose-Monohydrat und 330g deionisiertem Wasser innig vermengt und über Nacht im Vakuumtrockenschrank bei 70°C und <100mbar auf eine Restfeuchte <5% getrocknet. Das sprödharte Trocknungsprodukt wird von Hand gebrochen und in einer Scheibenmühle ("Fritsch Pulverisette 13") mit 1mm Scheibenabstand grob gemahlen und in Edelstahltiegeln in einen Schutzgas-Kammerofen ("Linn KS 80-S") überführt. Dieser wird bei einem StickstoffStrom von 2001/h innerhalb von 3h auf 750°C aufgeheizt, für 5h auf dieser Temperatur gehalten und innerhalb ca. 36h auf Raumtemperatur abgekühlt. Das kohlehaltige Produkt wird in einer Labor-Rotormühle ("Fritsch Pulverisette 14") mit einem 0,08mm Sieb deagglomeriert.

Die REM-Analyse der Teilchengrößenverteilung wie vor den Beispielen für kohlehaltige Masterialien beschrieben ergab folgende Werte: D50-Wert kleiner 0,6 µm, Differenz zwischen D90-Wert und D10-Wert kleiner 1,5 µm.

In elektrochemischen Tests an Dünnfilmelektrode, wie sie beispielsweise in Anderson et al., Electrochem. And Solid State Letters 3 (2) (2000), Seiten 66-68 offenbart sind, zeigte das kohlehaltige erfindungsgemäße Material (ausgehend von dem Produkt der Beispiele 1, 3 und 4) gegenüber dem ohne Verwendung eines Dispergators hergestellten Vergleichsmaterial sowie einem durch ein reines Sinterverfahren gemäß Stand der Technik hergestellten Material die besten Eigenschaften, insbesondere bei hohen Lade/Entladeraten.

## Patentansprüche

1. Verfahren zur Herstellung einer Verbindung der Formel LiMPO₄, worin M mindestens ein Metall der ersten Übergangsreihe darstellt, umfassend die folgenden Schritte:
a. Herstellen einer Precursormischung, enthaltend mindestens eine Li⁺-Quelle, mindestens eine M²⁺-Quelle und mindestens eine PO₄³⁻-Quelle, um einen Niederschlag zu fällen und somit eine Precursorsuspension herzustellen;
b. Dispergier- oder Mahlbehandlung der Precursormischung und/oder der Precursorsuspension, bis der D90-Wert der Teilchen in der Precursorsuspension weniger als 50 µm beträgt;
c. Gewinnung von LiMPO₄ aus der gemäß b) erhaltenen Precursorsuspension durch Umsetzung unter hydrothermalen Bedingungen.

2. Verfahren nach Ansprüche 1 **dadurch gekennzeichnet, dass** nach der Hydrothermalbehandlung das LiMPO₄ durch Filtration und/oder Zentrifugation abgetrennt wird sowie getrocknet und deagglomeriert wird.

3. Verfahren nach Ansprüche 1 oder 2 **dadurch gekennzeichnet, dass** das aus der Hydrothermalbehandlung erhaltene LiMPO₄ in einem Pyrolyse-Verfahren, bei dem mindestens ein Kohlenstoff-Vorläufermaterial ausgewählt aus der Gruppe bestehend aus ein Kohlenhydrat wie Zucker, Cellulose oder Lactose, mit dem LiMPO₄ vermengt wird . wobei Wasser als Hilfsmittel zugegeben werden kann.

4. Verfahren nach Anspruch 1 oder 3, **dadurch gekennzeichnet, dass** das Kohlenstoff-Vorläufermaterial dem nach der Hydrothermalsynthese durch Abtrennung erhaltenen feuchten LiMPO₄-Filterkuchen zugegeben wird, die Mischung aus LiMPO₄ und Kohlenstoff-Vorläufermaterial getrocknet und auf eine Temperatur zwischen 500°C und 1000°C erhitzt wird, wobei das Kohlenstoff-Vorläufermaterial zu Kohle pyrolysiert wird.

5. Verfahren nach Anspruch 4, **dadurch gekennzeichnet, dass** sich an die Pyrolyse eine Mahl- oder Deagglomerationsbehandlung anschließt.

6. Verfahren nach Anspruch 4 oder 5, **dadurch gekennzeichnet, dass** die Trocknung vorzugsweise an Schutzgas, an Luft oder im Vakuum bei Temperaturen von 50°C bis 200°C erfolgt, und die Pyrolyse unter Schutzgas durchgeführt wird.

7. Verfahren nach einem Ansprüche 1 bis 6, **dadurch gekennzeichnet, dass** der D90-Wert der Teilchen in der Suspension bei maximal 25 µm liegt.

8. Verfahren nach einem der vorstehenden Ansprüche, **dadurch gekennzeichnet, dass** M Fe, Mn, Co und/oder Ni umfasst.

9. Verfahren nach Anspruch 8, **dadurch gekennzeichnet, dass** M zumindest Fe umfasst oder Fe darstellt.

10. Verfahren nach einem der vorstehenden Ansprüche, **dadurch gekennzeichnet, dass** das LiMPO₄ in phasenreiner Form gewonnen wird.

11. Verfahren nach einem der vorstehenden Ansprüche, **dadurch gekennzeichnet, dass** die Dispergier- oder Mahlbehandlung vor oder während der Fällung der Precursormischung einsetzt und bis zum Abschluss der Fällung fortgesetzt wird.

12. Verfahren nach einem der vorstehenden Ansprüche, **dadurch gekennzeichnet, dass** die Dispergierbehandlung vor der Fällung der Precursormischung einsetzt, um eine hohe Kristallkeimbildung zu gewährleisten und die Bildung großer Kristalle und Kristallagglomerate zu verhindern.

13. Verfahren nach einem der vorstehenden Ansprüche, **dadurch gekennzeichnet, dass** vor der Umsetzung der Precursormischung oder -Suspension unter hydrothermalen Bedingungen kein Eindampfen erfolgt.

14. Verfahren nach einem der vorstehenden Ansprüche, **dadurch gekennzeichnet, dass** vor der Umsetzung der Precursormischung oder -suspension unter hydrothermalen Bedingungen kein Sintern erfolgt.

15. Verfahren nach einem der vorstehenden Ansprüche, **dadurch gekennzeichnet, dass** nach der Umsetzung unter hydrothermalen Bedingungen eine Trocknung des LiMPO₄ erfolgt.

16. Verfahren nach einem der vorstehenden Ansprüche, **dadurch gekennzeichnet, dass** die Herstellung der Precursormischung bzw. -suspension oder die Umsetzung unter hydrothermalen Bedingungen in Anwesenheit mindestens einer weiteren Komponente ausgewählt aus der Gruppe bestehend aus einer ohlenstoffhaltigen oder elektronenleitfähigen Substanz oder dem Vorläufer einer elektronenleitfähigen Substanz erfolgt.

17. Verfahren nach einem der vorstehenden Ansprüche, **dadurch gekennzeichnet, dass** es sich bei der elektronenleitfähigen Substanz um Kohle ausgewählt der Gruppe bestehend aus Leitkohle oder Kohlefasern handelt.

18. Verfahren nach einem der vorstehenden Ansprüche, **dadurch gekennzeichnet, dass** es sich bei dem Vorläufer einer elektronenleitfähigen Substanz um eine kohlenstoffhaltige Substanz, insbesondere eine Zuckerverbindung handelt.

19. Verfahren nach einem der vorstehenden Ansprüche, **dadurch gekennzeichnet, dass** in der Precursor-Mischung Wasser als Lösungsmittel verwendet wird.

20. Verfahren nach einem der vorstehenden Ansprüche, **dadurch gekennzeichnet, dass** die Li⁺-Quelle, die M²⁺-Quelle in Form von wässrigen Lösungen eingesetzt werden, und die PO₄³⁻-Quelle in Form einer Flüssigkeit oder einer wässrigen Lösung eingesetzt wird.

21. Verfahren nach einem der vorstehenden Ansprüche, **dadurch gekennzeichnet, dass** der in der Precursorsuspension gebildete Niederschlag mindestens einen Precursor von LiMPO₄) umfasst und anschließend unter hydrothermalen Bedingungen die Umsetzung in LiMPO₄ erfolgt.

22. Verfahren nach einem der vorstehenden Ansprüche, **dadurch gekennzeichnet, dass** bei den hydrothermalen Bedingungen. Temperaturen zwischen 100 bis 250°C, sowie ein Druck von 1 bar bis 40 bar Dampfdruck verwendet werden.

23. Verfahren nach einem der vorstehenden Ansprüche, **dadurch gekennzeichnet, dass** die Zusammengäbe oder Umsetzung der Precursormischung oder -suspension unter hydrothermalen Bedingungen unter Inertgasatmosphäre erfolgt.

24. Verfahren nach einem der vorstehenden Ansprüche, **dadurch gekennzeichnet, dass** zunächst in wässrigem Lösungsmittel die M²⁺-Quelle und die PO₄³⁻-Quelle unter **I-**nertgasatmosphäre, gemischt werden, anschließend wiederum unter Schutzgas- oder Inertatmosphäre, die Li⁺-Quelle zugegeben wird und dann die Umsetzung unter hydrothermalen Bedingungen erfolgt.

25. Verfahren nach einem der vorstehenden Ansprüche, **dadurch gekennzeichnet, dass** als Lithiumquelle LiOH oder Li₂CO₃ verwendet wird.

26. Verfahren nach einem der vorstehenden Ansprüche, **dadurch gekennzeichnet, dass** als Fe²⁺-Quelle ein Fe²⁺-Salz, insbesondere FeSO₄, FeCl₂, FeNO₃, Fe₃(PO₄)₂ oder ein Organylsalz von Eisen verwendet wird.

27. Verfahren nach einem der vorstehenden Ansprüche, **dadurch gekennzeichnet, dass** als PO₄³⁻-Quelle Phosphorsäure, ein Metallphosphat, Hydrogenphosphat oder Dihydrogenphosphat verwendet wird.

28. Verfahren nach Anspruch 25-27 **dadurch gekennzeichnet, dass** die Komponenten der Precursormischung in folgendem stöchometrischen Verhältnis vorliegen:
a. 1 mol Fe²⁺: 1 mol PO₄³⁻ : 1 mol Li* (1:1:1)
b. 1 mol Fe²⁺ : 1 mol PO₄³⁻ : 3 mol Li* (1:1:3)
c. jedes Mischungsverhältnis zwischen a und b.

29. Verfahren nach einem der vorstehenden Ansprüche, **dadurch gekennzeichnet, dass** es sich bei der Dispergier- oder Mahlbehandlung um eine Behandlung mit Dispergatoren (mit oder ohne Pumprotor), Ultraturrax, Mühlen wie Kolloidmühlen oder Manton-Gaulin-Mühlen, Intensivmischern, Kreiselpumpen, In-Line-Mischern, Mischdüsen wie Injektordüsen oder Ultraschallgeräten handelt.

30. Verfahren nach einem der vorstehenden Absprüche, **dadurch gekennzeichnet, dass** zur hochscherenden Behandlung gemäß Anspruch 1b ein Rührwerk oder dergleichen verwendet wird, wobei der Leistungseintrag, berechnet nach der Formel P = 2 n n M, wobei M das Drehmoment und n die Drehzahl. darstellt bei mindestens 5 kW/m³ liegt.

31. Verfahren nach einem der vorstehenden Ansprüche, **dadurch gekennzeichnet, dass** die zusätzliche Komponente gemäß Anspruch 16 oder 17 als Kristallisationskeim in der Fällung bzw. Umsetzung der Precursormischung verwendet wird.

32. LiFePO₄ erhältlich nach einem der vorstehenden Verfahrensansprüche mit einem D50-Wert von kleiner 0,8 µm, einem D10-Wert kleiner 0,4 µm und einem D90- Wert kleiner als 3µm.

33. LiFePO₄ gemäß Anspruch 32, **dadurch gekennzeichnet, dass** die mittlere Teilchengröße (D50-Wert) bei weniger als 0,5 µm liegt

34. LiFePO₄ gemäß Anspruch 32 oder 33, **dadurch gekennzeichnet, dass** der D10-Wert der Teilchen bei weniger als 0, 35 µm liegt, und der D90-Wert bei weniger als 2,0 µm liegt.

35. LiFePO₄ gemäß einem der Ansprüche 32 bis 34, **dadurch gekennzeichnet, dass** die Differenz zwischen dem D90-Wert und dem D10-Wert der Teilchen nicht mehr als 2 µm, beträgt.

36. LiFePO₄ gemäß einem der Ansprüche 32 bis 35, **dadurch gekennzeichnet, dass** dass die BET-Oberfläche mehr als 3,5 m²/g beträgt.

37. Zusammensetzung, insbesondere Elektrodenmaterial, enthaltend LiFePO₄ gemäß einem der Ansprüche 32 bis 36.

38. Zusammensetzung, nach Anspruch 37, weiterhin enthaltend mindestens einer weiteren Komponente ausgewählt aus der Gruppe bestehend aus einer kohlenstoffhaltigen oder elektronenleitfähigen Substanz oder dem Vorläufer einer elektronenleitfähigen Substanz, wie Kohle, Leitkohle oder Kohlefasern.

39. Sekundäre Batterie, enthaltend eine Zusammensetzung, insbesondere ein Elektrodenmaterial nach Anspruch 37 oder 38.

40. Verwendung von LiMPO₄ gemäß einem der Ansprüche 32 bis 36 als Elektrodenmaterial.

## Claims

1. Method for producing a compound of formula LiMPO₄, in which M represents at least one metal of the first transition series, comprising the following steps:
a. producing a precursor mixture containing at least one Li⁺ source, at least one M²⁺ source and at least one PO₄³⁻ source, in order to precipitate a precipitate and thus produce a precursor suspension;
b. treating the precursor mixture and/or the precursor suspension by dispersion or grinding until the D90 value of the particles in the precursor suspension is less than 50 µm;
c. producing LiMPO₄ from the precursor suspension obtained according to b) by conversion under hydrothermal conditions.

2. Method according to claim 1, **characterized in that**, after the hydrothermal treatment, the LiMPO₄ is separated off by filtration and/or centrifuging, as well as dried and disagglomerated.

3. Method according to claim 1 or 2, **characterized in that** the LiMPO₄ obtained from the hydrothermal treatment is in a pyrolysis method in which at least one carbon precursor material, selected from the group consisting of a carbohydrate such as sugar, cellulose or lactose, is mixed with the LiMPO₄, wherein water can be added as excipient.

4. Method according to claim 1 or 3, **characterized in that** the carbon precursor material is added to the moist LiMPO₄ filter cake obtained after the hydrothermal synthesis by separation off, the mixture of LiMPO₄ and carbon precursor material is dried and heated to a temperature between 500°C and 1000°C, wherein the carbon precursor material is pyrolyzed to carbon.

5. Method according to claim 4, **characterized in that** a grinding or disagglomeration treatment follows the pyrolysis.

6. Method according to claim 4 or 5, **characterized in that** the drying preferably takes place under protective gas, in air or under vacuum at temperatures of from 50°C to 200°C, and the pyrolysis is carried out under protective gas.

7. Method according to one of claims 1 to 6, **characterized in that** the D90 value of the particles in the suspension is at most 25 µm.

8. Method according to one of the previous claims, **characterized in that** M comprises Fe, Mn, Co and/or Ni.

9. Method according to claim 8, **characterized in that** M at least comprises Fe or represents Fe.

10. Method according to one of the previous claims, **characterized in that** the LiMPO₄ is obtained in phase-pure form.

11. Method according to one of the previous claims, **characterized in that** the dispersion or grinding treatment takes place before or during the precipitation of the precursor mixture and is continued until the precipitation is complete.

12. Method according to one of the previous claims, **characterized in that** the dispersion treatment takes place before the precipitation of the precursor mixture in order to ensure a high nucleation and to prevent the formation of large crystals and crystal agglomerates.

13. Method according to one of the previous claims, **characterized in that** no evaporation takes place before the conversion of the precursor mixture or suspension under hydrothermal conditions.

14. Method according to one of the previous claims, **characterized in that** no sintering takes place before the conversion of the precursor mixture or suspension under hydrothermal conditions.

15. Method according to one of the previous claims, **characterized in that** the LiMPO₄ is dried after the conversion under hydrothermal conditions.

16. Method according to one of the previous claims, **characterized in that** the production of the precursor mixture or suspension or the conversion under hydrothermal conditions takes place in the presence of at least one further component selected from the group consisting of a carbon-containing or n-type conductive substance or the precursor of an n-type conductive substance.

17. Method according to one of the previous claims, **characterized in that** the n-type conductive substance is carbon selected from the group consisting of conductive carbon or carbon fibres.

18. Method according to one of the previous claims, **characterized in that** the precursor of an n-type conductive substance is a carbon-containing substance, in particular a sugar compound.

19. Method according to one of the previous claims, **characterized in that** water is used as solvent in the precursor mixture.

20. Method according to one of the previous claims, **characterized in that** the Li⁺ source, the M²⁺ source are used in the form of aqueous solutions, and the PO₄³⁻ source is used in the form of a liquid or an aqueous solution.

21. Method according to one of the previous claims, **characterized in that** the precipitate formed in the precursor suspension comprises at least one precursor of LiMPO₄, and the conversion to LiMPO₄ then takes place under hydrothermal conditions.

22. Method according to one of the previous claims, **characterized in that**, under the hydrothermal conditions, temperatures of from 100 to 250°C, as well as a pressure of from 1 bar to 40 bar vapour pressure are used.

23. Method according to one of the previous claims, **characterized in that** the mixing together or conversion of the precursor mixture or suspension under hydrothermal conditions takes place under inert gas atmosphere.

24. Method according to one of the previous claims, **characterized in that** first the M²⁺ source and the PO₄³ source are mixed in aqueous solvent under inert gas atmosphere, then the Li⁺ source is added, again under protective gas or inert atmosphere, and the conversion then takes place under hydrothermal conditions.

25. Method according to one of the previous claims, **characterized in that** LiOH or Li₂CO₃ is used as lithium source.

26. Method according to one of the previous claims, **characterized in that** an Fe²⁺ salt, in particular FeSO₄, FeCl₂, FeNO₃, Fe₃(PO₄)₂ or an organyl salt of iron is used as Fe²⁺ source.

27. Method according to one of the previous claims, **characterized in that** phosphoric acid, a metal phosphate, hydrogen phosphate or dihydrogen phosphate is used as PO₄³⁻ source.

28. Method according to claims 25-27, **characterized in that** the components of the precursor mixture are present in the following stoichiometric ratio:
a. 1 mol Fe²⁺ : 1 mol PO₄³⁻ : 1 mol Li* (1:1:1)
b. 1 mol Fe²⁺ : 1 mol PO₄³⁻ : 3 mol Li* (1:1:3)
c. any mixing ratio between a and b.

29. Method according to one of the previous claims, **characterized in that** the dispersion or grinding treatment is a treatment with dispersers (with or without pump rotor), Ultraturrax, mills such as colloid mills or Manton-Gaulin mills, intensive mixers, centrifugal pumps, in-line mixers, mixing nozzles such as injector nozzles or ultrasonic devices.

30. Method according to one of the previous claims, **characterized in that** a stirrer or similar is used for the high-shearing treatment according to claim 1b, wherein the power input, calculated according to the formula P = 2 n n M, wherein M represents the torque and n the rpm, is at least 5 kW/m³.

31. Method according to one of the previous claims, **characterized in that** the additional component according to claim 16 or 17 is used as crystallization nucleus in the precipitation or conversion of the precursor mixture.

32. LiFePO₄ obtainable according to one of the previous method claims, with a D50 value of less than 0.8 µm, a D10 value of less than 0.4 µm and a D90 value of less than 3 µm.

33. LiFePO₄ according to claim 32, **characterized in that** the average particle size (D50 value) is less than 0.5 µm.

34. LiFePO₄ according to claim 32 or 33, **characterized in that** the D10 value of the particles is less than 0.35 µm, and the D90 value is less than 2.0 µm.

35. LiFePO₄ according to one of claims 32 to 34, **characterized in that** the difference between the D90 value and the D10 value of the particles is no more than 2 µm.

36. LiFePO₄ according to one of claims 32 to 35, **characterized in that** the BET surface area is greater than 3.5 m²/g.

37. Composition, in particular electrode material, containing LiFePO₄ according to one of claims 32 to 36.

38. Composition according to claim 37, furthermore containing at least one further component selected from the group consisting of carbon-containing or n-type conductive substance or the precursor of an n-type conductive substance, such as carbon, conductive carbon or carbon fibres.

39. Secondary battery, containing a composition, in particular an electrode material according to claim 37 or 38.

40. Use of LiMPO₄ according to one of claims 32 to 36 as electrode material.

## Revendications

1. Procédé de fabrication d'un composé de la formule LiMPO₄, dans laquelle M représente au moins un métal de la première rangée de transition, comprenant les étapes suivantes :
a. fabrication d'un mélange de précurseurs contenant au moins une source de Li⁺, au moins une source de M²⁺ et au moins une source de PO₄³⁻ pour faire précipiter un sédiment et fabriquer ainsi une suspension de précurseurs ;
b. traitement de dispersion ou broyage du mélange de précurseurs et/ou de la suspension de précurseurs jusqu'à ce que la valeur D90 des particules se monte à moins de 50 µm dans la suspension de précurseurs ;
c. obtention de LiMPO₄ à partir de la suspension de précurseurs obtenue selon b) par conversion dans des conditions hydrothermales.

2. Procédé selon la revendication 1, **caractérisé en ce qu'**après le traitement hydrothermal, le LiMPO₄ est séparé par filtration et/ou centrifugation, ainsi que séché et désaggloméré.

3. Procédé selon la revendication 1 ou 2, **caractérisé en ce que** le LiMPO₄ obtenu à partir du traitement hydrothermal dans un procédé de pyrolyse lors duquel au moins un matériau précurseur de carbone sélectionné parmi le groupe constitué d'un glucide comme le sucre, la cellulose ou le lactose, est mélangé au LiMPO₄, dans lequel de l'eau peut être ajoutée en tant qu'adjuvant.

4. Procédé selon la revendication 1 ou 3, **caractérisé en ce que** le matériau précurseur de carbone est ajouté au gâteau de filtre-presse de LiMPO₄ humide obtenu par séparation après la synthèse hydrothermale, le mélange de LiMPO₄ et de matériau précurseur de carbone est séché et chauffé à une température comprise entre 500°C et 1000°C, dans lequel le matériau précurseur de carbone est pyrolyse en charbon.

5. Procédé selon la revendication 4, **caractérisé en ce qu'**un traitement de broyage ou désagglomération suit la pyrolyse.

6. Procédé selon la revendication 4 ou 5, **caractérisé en ce que** le séchage s'effectue de préférence sous gaz protecteur, à l'air ou sous vide à des températures de 50°C à 200°C et la pyrolyse est effectuée sous gaz protecteur.

7. Procédé selon l'une quelconque des revendications 1 à 6, **caractérisé en ce que** la valeur D90 des particules dans la suspension se situe à 25 µm maximum.

8. Procédé selon l'une quelconque des revendications précédentes, **caractérisé en ce que** M comprend Fe, Mn, Co et/ou Ni.

9. Procédé selon la revendication 8, **caractérisé en ce que** M comprend au moins Fe ou représente Fe.

10. Procédé selon l'une quelconque des revendications précédentes, **caractérisé en ce que** le LiMPO₄ est obtenu sous forme exempte de déphasage.

11. Procédé selon l'une quelconque des revendications précédentes, **caractérisé en ce que** le traitement de dispersion ou broyage commence avant ou pendant la précipitation du mélange de précurseurs et est poursuivi jusqu'à la fin de la précipitation.

12. Procédé selon l'une quelconque des revendications précédentes, **caractérisé en ce que** le traitement de dispersion commence avant la précipitation du mélange de précurseurs pour garantir une formation de germes cristallins élevée et empêcher la formation de gros cristaux et agglomérats cristallins.

13. Procédé selon l'une quelconque des revendications précédentes, **caractérisé en ce qu'**aucune évaporation n'a lieu avant la conversion du mélange ou de la suspension de précurseurs dans des conditions hydrothermales.

14. Procédé selon l'une quelconque des revendications précédentes, **caractérisé en ce qu'**aucun frittage n'a lieu avant la conversion du mélange ou de la suspension de précurseurs dans des conditions hydrothermales.

15. Procédé selon l'une quelconque des revendications précédentes, **caractérisé en ce qu'**un séchage du LiMPO₄ a lieu après la conversion dans des conditions hydrothermales.

16. Procédé selon l'une quelconque des revendications précédentes, **caractérisé en ce que** la fabrication du mélange ou de la suspension de précurseurs ou la conversion dans des conditions hydrothermales s'effectue en présence d'au moins un autre composant sélectionné parmi le groupe constitué d'une substance contenant du carbone ou conductrice d'électrons ou du précurseur d'une substance conductrice d'électrons.

17. Procédé selon l'une quelconque des revendications précédentes, **caractérisé en ce qu'**il s'agit pour la substance conductrice d'électrons de charbon sélectionné parmi le groupe constitué de charbon conducteur ou de fibres de charbon.

18. Procédé selon l'une quelconque des revendications précédentes, **caractérisé en ce qu'**il s'agit pour le précurseur d'une substance conductrice d'électrons d'une substance contenant du carbone, notamment d'un composé de sucre.

19. Procédé selon l'une quelconque des revendications précédentes, **caractérisé en ce que** de l'eau est utilisée comme solvant dans le mélange de précurseurs.

20. Procédé selon l'une quelconque des revendications précédentes, **caractérisé en ce que** la source de Li⁺, la source de M²⁺ sont utilisées sous la forme de solutions aqueuses, et la source de PO₄³⁻ est utilisée sous la forme d'un liquide ou d'une solution aqueuse.

21. Procédé selon l'une quelconque des revendications précédentes, **caractérisé en ce que** le sédiment formé dans la suspension de précurseurs comprend au moins un précurseur de LiMPO₄ et la conversion en LiMPO₄ a ensuite lieu dans des conditions hydrothermales.

22. Procédé selon l'une quelconque des revendications précédentes, **caractérisé en ce que** des températures entre 100 et 250°C ainsi qu'une pression de 1 bar à 40 bars de pression de vapeur sont utilisées lors des conditions hydrothermales.

23. Procédé selon l'une quelconque des revendications précédentes, **caractérisé en ce que** l'addition ou la conversion du mélange ou de la suspension de précurseurs dans des conditions hydrothermales s'effectue dans une atmosphère de gaz inerte.

24. Procédé selon l'une quelconque des revendications précédentes, **caractérisé en ce que** la source de M²⁺ et la source de PO₄³⁻ sont d'abord mélangées dans un solvant aqueux dans une atmosphère de gaz inerte, puis la source de Li⁺ est ajoutée de nouveau dans une atmosphère de gaz protecteur ou inerte, et la conversion a ensuite lieu dans des conditions hydrothermales.

25. Procédé selon l'une quelconque des revendications précédentes, **caractérisé en ce que** LiOH ou Li₂CO₃ est utilisé comme source de lithium.

26. Procédé selon l'une quelconque des revendications précédentes, **caractérisé en ce qu'**un sel de Fe²⁺, notamment FeSO₄, FeCl₂, FeNO₃, Fe₃(PO₄)₂ ou un sel d'organyle de fer est utilisé en tant que source de Fe²⁺.

27. Procédé selon l'une quelconque des revendications précédentes, **caractérisé en ce que** de l'acide phosphorique, un phosphate métallique, un hydrogénophosphate ou un dihydrogénophosphate est utilisé en tant que source de PO₄³⁻.

28. Procédé selon les revendications 25 à 27, **caractérisé en ce que** les composants du mélange de précurseurs sont présents dans le rapport stoechiométrique suivant :
a. 1 mol Fe²⁺ / 1 mol PO₄³⁻ / 1 mol Li* (1/1/1)
b. 1 mol Fe²⁺ / 1 mol PO₄³⁻ / 3 mol Li* (1/1/3)
c. tout rapport de mélange entre a et b.

29. Procédé selon l'une quelconque des revendications précédentes, **caractérisé en ce qu'**il s'agit pour le traitement de dispersion ou broyage d'un traitement avec des appareils à disperser (avec ou sans rotor à pompe), Ultra-Turrax, des pulvérisateurs comme des pulvérisateurs colloïdaux ou des pulvérisateurs Manton-Gaulin, des mélangeurs intensifs, des pompes centrifuges, des mélangeurs en ligne, des buses mélangeuses comme des buses à injecteur ou des appareils à ultrasons.

30. Procédé selon l'une quelconque des revendications précédentes, **caractérisé en ce qu'**un agitateur ou similaire est utilisé pour le traitement à cisaillement élevé selon la revendication 1b, dans lequel la charge de puissance, calculée selon la formule P = 2 n n M dans laquelle M représente le couple de rotation et n la vitesse de rotation, se situe à au moins 5 kW/m³.

31. Procédé selon l'une quelconque des revendications précédentes, **caractérisé en ce que** le composant supplémentaire selon la revendication 16 ou 17 est utilisé en tant que germe de cristallisation dans la précipitation ou la conversion du mélange de précurseurs.

32. LiFePO₄ pouvant être obtenu selon l'une quelconque des revendications de procédé précédentes avec une valeur D50 inférieure à 0,8 µm, une valeur D10 inférieure à 0,4 µm et une valeur D90 inférieure à 3 µm.

33. LiFePO₄ selon la revendication 32, **caractérisé en ce que** la taille de particules moyenne (valeur D50) est à moins de 0,5 µm.

34. LiFePO₄ selon la revendication 32 ou 33, **caractérisé en ce que** la valeur D10 des particules se situe à moins de 0,35 µm et la valeur D90 se situe à moins de 2,0 µm.

35. LiFePO₄ selon l'une quelconque des revendications 32 à 34, **caractérisé en ce que** la différence entre la valeur D90 et la valeur D10 des particules ne se monte pas à plus de 2 µm.

36. LiFePO₄ selon l'une quelconque des revendications 32 à 35, **caractérisé en ce que** la surface spécifique se monte à plus de 3,5 m²/g.

37. Composition, notamment matériau d'électrode, contenant LiFePO₄ selon l'une quelconque des revendications 32 à 36.

38. Composition selon la revendication 37, contenant en outre au moins un autre composant sélectionné parmi le groupe constitué d'une substance contenant du carbone ou conductrice d'électrons ou du précurseur d'une substance conductrice d'électrons, comme du charbon, du charbon conducteur ou des fibres de charbon.

39. Batterie secondaire contenant une composition, notamment un matériau d'électrode selon la revendication 37 ou 38.

40. Utilisation de LiMPO₄ selon l'une quelconque des revendications 32 à 36 en tant que matériau d'électrode.
